# EUROPÄISCHE PATENTSCHRIFT

(11) **EP 1 554 145 B1**
(45) Veröffentlichungstag und Bekanntmachung des Hinweises auf die Patenterteilung: **06.06.2012**
(21) Anmeldenummer: 03773516.4
(22) Anmeldetag: 13.10.2003
(51) Int. Cl.: B60J 7/14, B60J 7/02, B60J 7/043

(54) **CABRIOLET-FAHRZEUG**
CONVERTIBLE
CABRIOLET

(30) Priorität: 17.10.2002 DE 10248348; 17.10.2002 DE 10248349; 17.10.2002 DE 10248350
(43) Veröffentlichungstag der Anmeldung: 20.07.2005
(73) Patentinhaber: Wilhelm Karmann GmbH, 49084 Osnabrück (DE)
(72) Erfinder: RUSSKE, Klaus, 49143 Bissendorf (DE)
(74) Vertreter: Kronthaler, Schmidt & Coll.
(86) Internationale Anmeldenummer: PCT/DE2003/003398
(87) Internationale Veröffentlichungsnummer: WO 2004/037586

(56) Entgegenhaltungen:
- EP-A- 0 899 142
- DE-A- 3 616 017
- DE-A- 4 100 677
- DE-A1- 10 001 526
- DE-C- 4 038 074
- DE-U- 20 201 411
- US-A- 2 768 025

## Beschreibung

Die Erfindung betrifft ein Schwenkdach für ein Cabriolet-Fahrzeug nach dem Oberbegriff des Anspruchs 1 und ein Cabriolet-Fahrzeug nach Anspruch 9.

Die DE 42 03 228 C2 zeigt ein Cabrioletfahrzeugdach mit einem hinteren, eine Heckscheibe umfassenden Dachteil und zwei diesem in Fahrtrichtung vorgeordneten seitlichen Rahmenteilen, an denen ein diesen gegenüber längs verschiebliches vorderes Dachteil geführt ist. Dieses vordere Dachteil kann in den seitlichen Führungen nach Art eines Schiebedachs verschoben werden, wobei es auch in seiner Offenstellung vollständig in den Führungen verbleibt. Dadurch ist die Größe der durch die Schiebedachöffnung entstehenden Dachöffnung begrenzt. Zur weiteren Dachablage wird zunächst der hintere Dachteil abwärts verschwenkt, erst dann kann der obere, das Schiebedach umfassende Dachteil öffnen und sich auf den hinteren Dachteil auflegen. Eine Mechanik hierfür ist aufwendig. Zumindest eine zusätzliche Abstützung der seitlichen Rahmenteile gegenüber der Karosserie, hier mit den B-Säulen 6 und den C-Säulen 9 sogar pro Fahrzeugseite zwei Abstützungen, die den Innenraum einschränken und die Optik verschlechtern, sind erforderlich. Das Öffnen oder Schließen des Daches in die oder aus der vollständigen Offenstellung benötigt sehr viel Zeit.

Die DE 41 00 677 A1 zeigt ein Fahrzeug mit vorderen Dachteil, das seitliche Führungsschienen aufweist und dadurch ein flächiges mittleres Dachstück mitsamt den teleskopisch nach hinten einziehbaren Führungsschienen nach hinten oberhalb einer Heckscheibe verschoben werden kann. Dieses Einziehen seitlicher Führungsschienen ist mechanisch sehr aufwendig und erlaubt nur minimale Toleranzen, um während der Bewegung ein Verkanten zu verhindern.

Die DE 100 01526 zeigt ein Fahrzeug mit einem Festdach, bei dem ein vorderer Dachteil feste seitliche Führungsschienen aufweist und dadurch ein flächiges mittleres Dachstück nach hinten oberhalb einer einer beweglichen Klappe zugeordneten Heckscheibe verschoben und dabei - einen Zwischenraum überlaufend - komplett an hintere Führungsschienen übergeben werden kann.

Der Erfindung liegt das Problem zugrunde, den Bewegungsablauf der Dachteile in einem Cabriolet-Fahrzeug zu implementieren.

Die Erfindung löst dieses Problem durch ein Schwenkdach für ein Cabriolet-Fahrzeug mit den Merkmalen des Anspruchs 1 sowie durch ein Cabriolet-Fahrzeug mit den Merkmalen des Anspruchs 9. Zu weiteren vorteilhaften Ausgestaltungen der Erfindung wird auf die abhängigen Ansprüche 2 bis 8 verwiesen.

Erfindungsgemäß ist durch den als Schiebedach wirkenden Plattenkörper des oberen Dachteils auch eine große Teilöffnung des Daches während der Fahrt ermöglicht. Dadurch, daß das Schiebedach in Offenstellung parallel zur Heckscheibe liegt, kann nahezu der gesamte Bereich zwischen dem Windschutzscheibenrahmen und dem hinteren Dachteil in dieser Offenstellung freigegeben werden. Die Sicht nach hinten bleibt dabei aufgrund der Transparenz des Plattenkörpers gesichert. Auch die Ablagemechanik des Daches zu seiner Gesamtöffnung ist beschleunigt, da das Schiebedach zumindest in seiner parallel zur Heckscheibe gehaltenen Offenstellung mit dem öffnenden hinteren Dachteil gleichzeitig - und nicht nacheinander - ablegbar ist.

Dadurch, daß der Plattenkörper sowohl in geöffneter als auch in geschlossener Stellung jeweils mit einem vorderen Endbereich in einer dem oberen Dachteil zugeordneten Führung und mit seinem hinteren Endbereich in einer dem hinteren Dachteil zugeordneten Führung gehalten ist, ergibt sich ein besonders sanftes Öffnen und Schließen des Schiebedachs, da dieses keine Stufe zwischen mehreren Dachteilen durchlaufen muß, sondern im geöffneten wie auch im geschlossenen Zustand jeweils denselben Dachteilen zugeordnet bleibt.

Eine Halterung des vorderen Endbereichs des Plattenkörpers in dessen Öffnungsstellung über Ausleger koaxial mit einer Achse eines Schwenkgelenks, das den hinteren und den oberen Dachteil miteinander verbindet, erlaubt dabei vorteilhaft das Mitschwenken des Plattenkörpers in seiner geöffneten Stellung mit dem hinteren Dachteil.

Bei einer Schwenkanbindung des die Heckscheibe umfassenden Mittelbereichs sowohl an die Fahrzeugkarosserie als auch an den oberen Dachteil ist erreicht, daß der die Heckscheibe umfassende Mittelbereich als Schwenklenker wirken kann. Das Schwenkgelenk zwischen dem Mittelbereich und dem oberen Dachteil kann derart hoch liegen, daß eine Verlagerung des Plattenkörpers über den hinteren Dachteil vorgenommen werden kann und dabei das Schiebedach in dem hoch gelegenen Gelenk gehalten sein kann. Die Kopffreiheit ist dadurch erhöht, die Verletzungsgefahr durch in diesem Bereich angeordnete Teile vermindert.

Insbesondere wenn sowohl die Hauptsäulen als auch der Mittelteil jeweils als Schwenklenker zwischen Karosserie und oberem Dachteil wirken können, ist bereits pro Fahrzeugseite je ein Lenkerpaar gebildet, wodurch eine vorteilhafte Dachablagekinematik verwirklicht werden kann. Durch die einzelne Schwenkbarkeit des Mittelteils einerseits und der seitlichen Hauptsäulen andererseits kann eine Anpassung der Dachablagebewegung an die Platzverhältnisse in der Karosserie erfolgen, da in Ablagestellung die genannten Teile zueinander beabstandet liegen können, wobei durch eine erhöhte Lage des Mittelteils zusätzlicher Gepäckraum gewonnen werden kann.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein erfindungsgemäßes Cabriolet-Fahrzeug in schematischer, unten und vorne abgebrochener Seitenansicht bei geschlossenem Dach und geschlossenem Plattenkörper des oberen Dachteils,
- Fig. 2: eine ähnliche Ansicht wie Fig. 1 in teilweise geöffneter Stellung des als Schiebedachs wirkenden Plattenkörpers,
- Fig. 3: eine ähnliche Ansicht wie Fig. 2 mit zusätzlich eingezeichnetem Antrieb und Vorgelegegetriebe für die Bewegung der Dachteile,
- Fig. 4: eine ähnliche Ansicht wie Fig. 2 in vollständiger Öffnungsstellung des Plattenkörpers und ansonsten geschlossenem Dach,
- Fig. 5: das Dach während seiner Öffnung.
- Fig. 6: eine ähnliche Ansicht wie Fig. 5 bei weiter fortschreitender Dachöffnung,
- Fig. 7: das Dach nach Fig. 6 in vollständig geöffneter, im Heckbereich des Fahrzeugs abgelegter Stellung,
- Fig. 8: eine perspektivische Explosionsdarstellung des Daches mit im oberen Dachteil vorgesehenem Plattenteil,

Fig. 9 bis Fig. 12 eine vereinfachte systematische Seitenansicht der für die Dachablage maßgeblichen bewegten Teile ohne Berücksichtigung von Antrieben, Getrieben oder eines Schiebedaches, darin

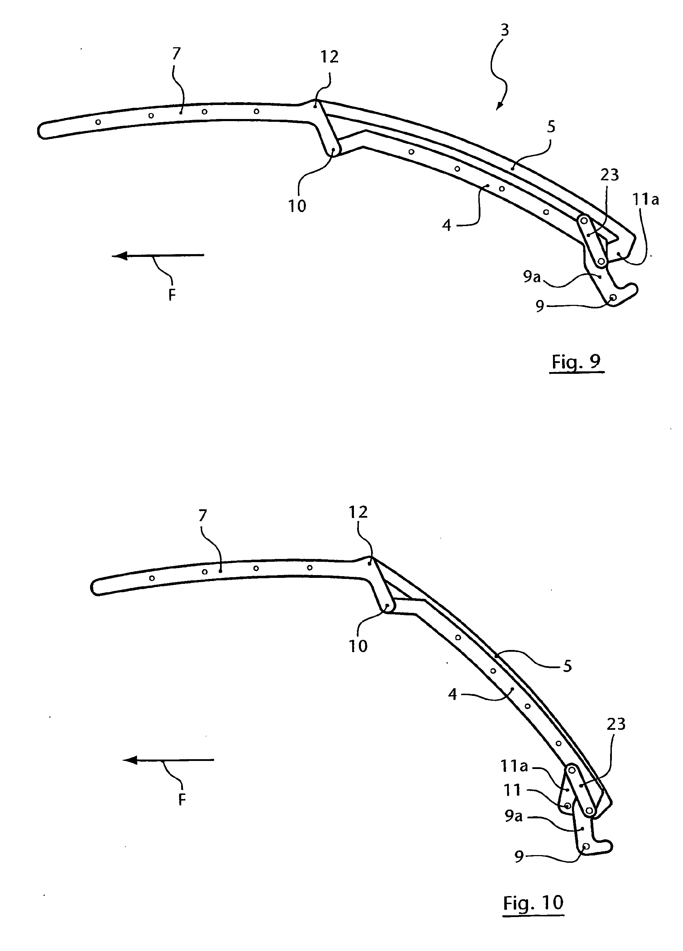

- Fig. 9: die Dachkinematik in geschlossener Dachstellung,

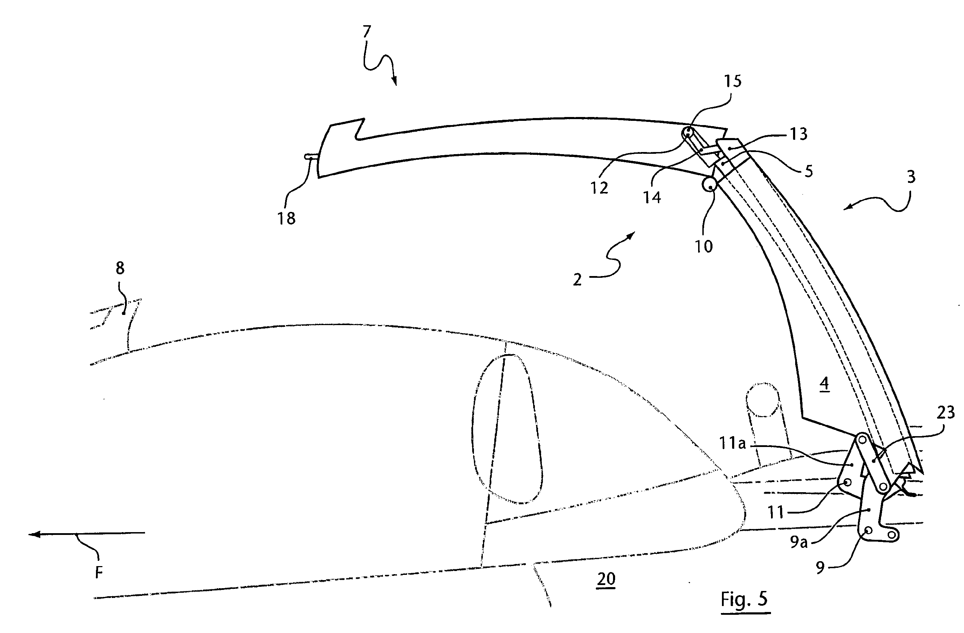

- Fig. 10: die Dachkinematik in der ersten Öffnungsphase etwa entsprechend der Öffnungsstellung nach Figur 5,

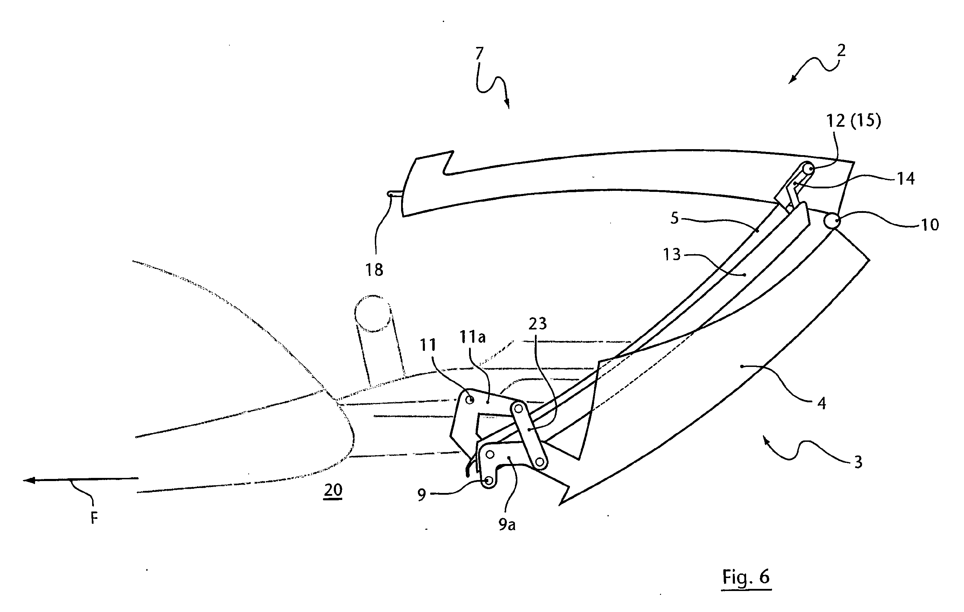

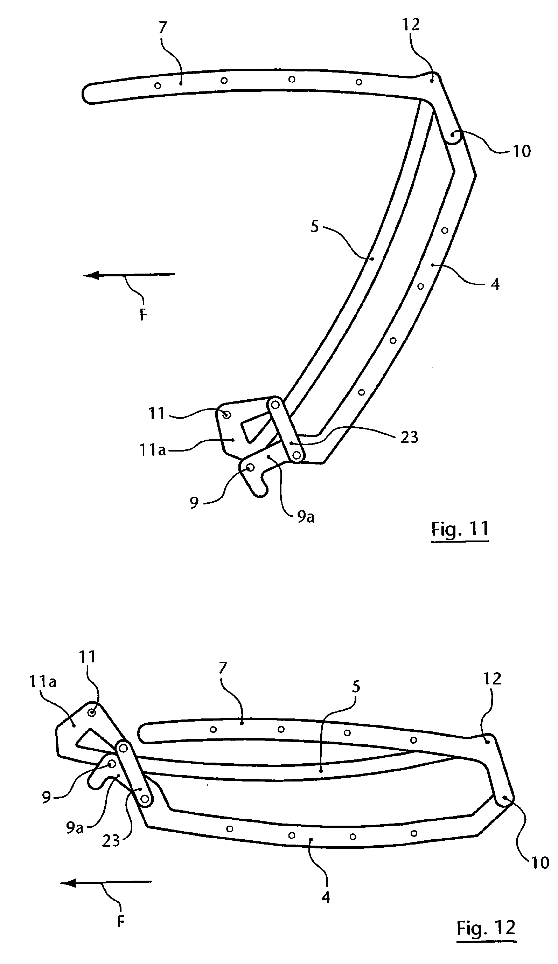

- Fig. 11: die Dachkinematik in Öffnungsstellung etwa entsprechend der Öffnungsstellung nach Figur 6,

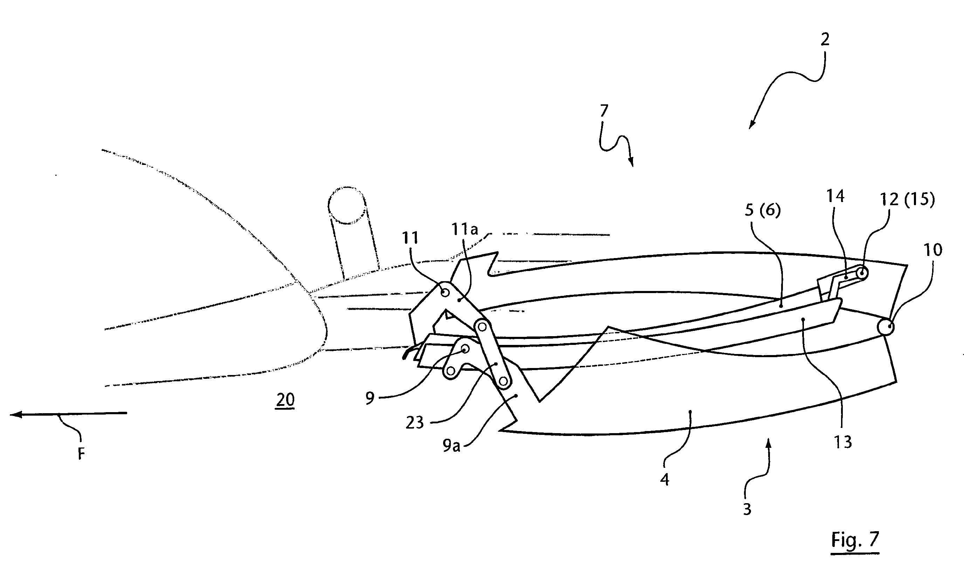

- Fig. 12: die Dachkinematik in vollständig geöffneter Stellung entsprechend Figur 7,

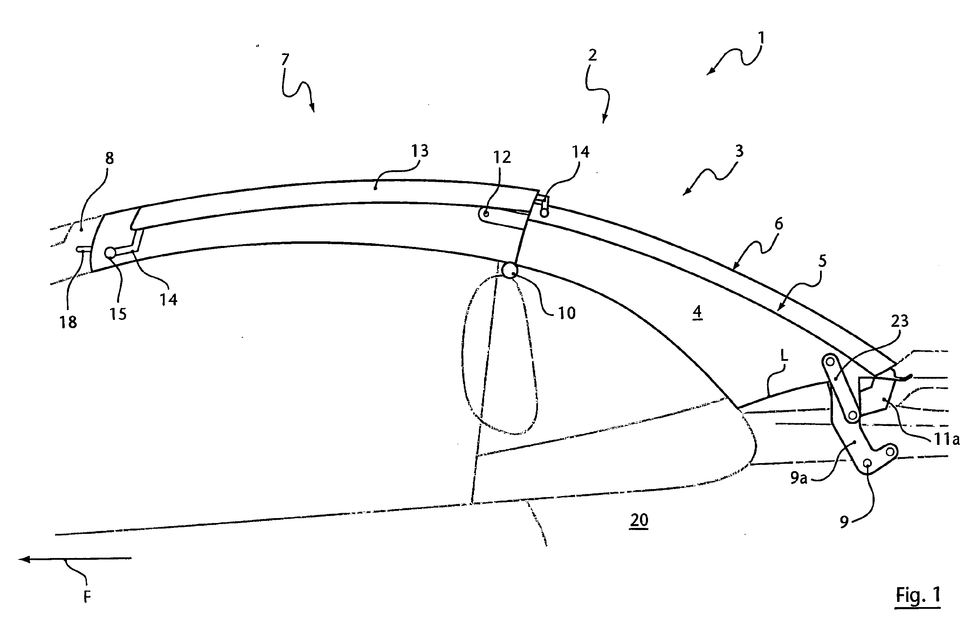

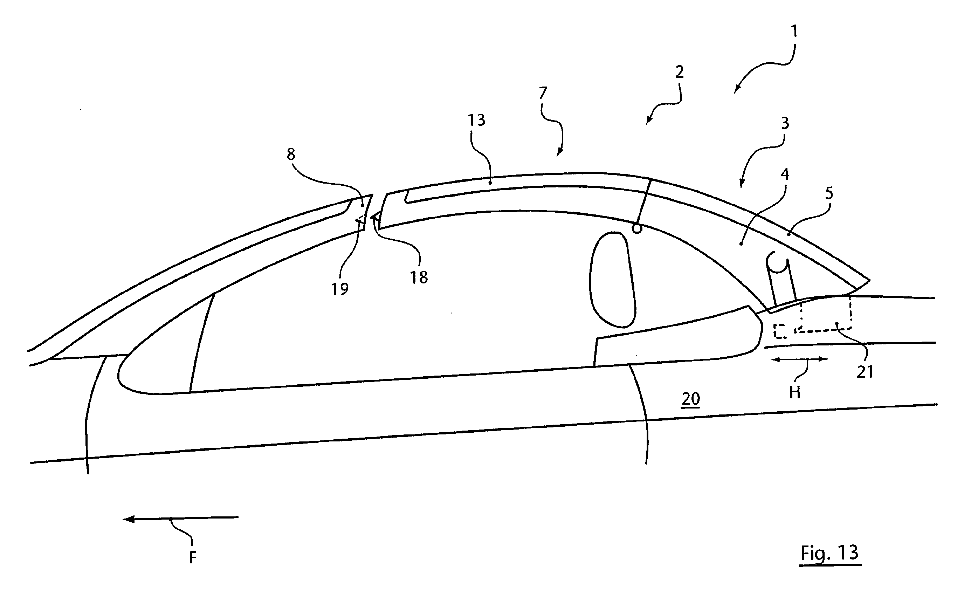

- Fig. 13: eine ähnliche Ansicht wie Fig. 1 mit insgesamt horizontal nach hinten verlagertem Dach zur Lösung des Eingriffs zwischen dem vorderen Dachende und dem Windschutzscheibenrahmen,

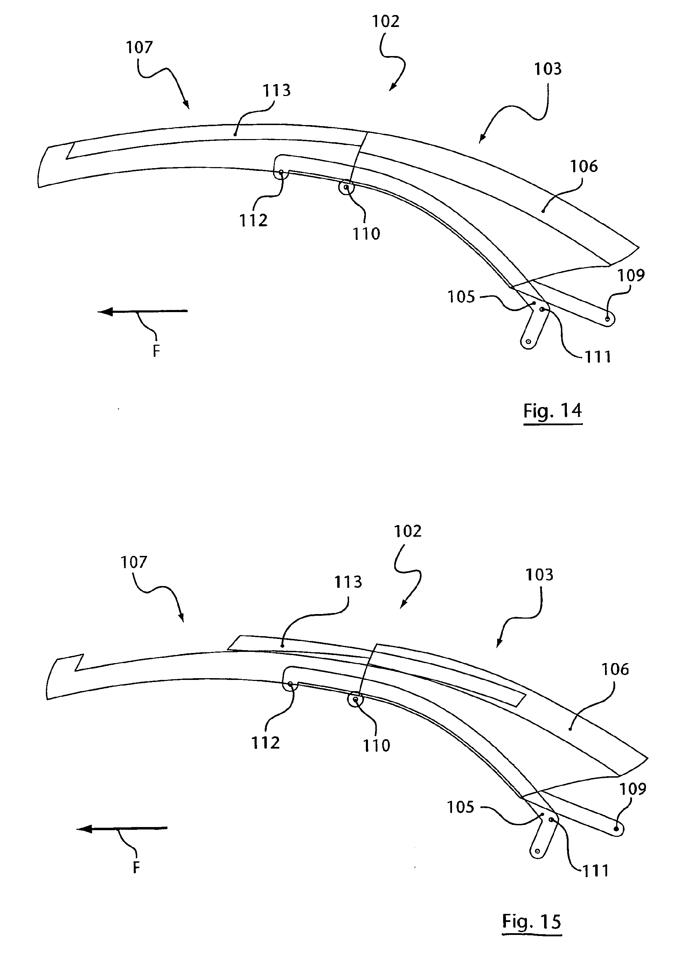

- Fig. 14: eine alternative Klappdachausbildung mit einer herkömmlichen Lenkerausbildung in geschlossener Stellung des Daches bei geschlossenem Schiebedach,

- Fig. 15: die alternative Klappdachausbildung nach Fig. 14 in geschlossener Stellung des Daches bei teilweise geöffnetem Schiebedach,

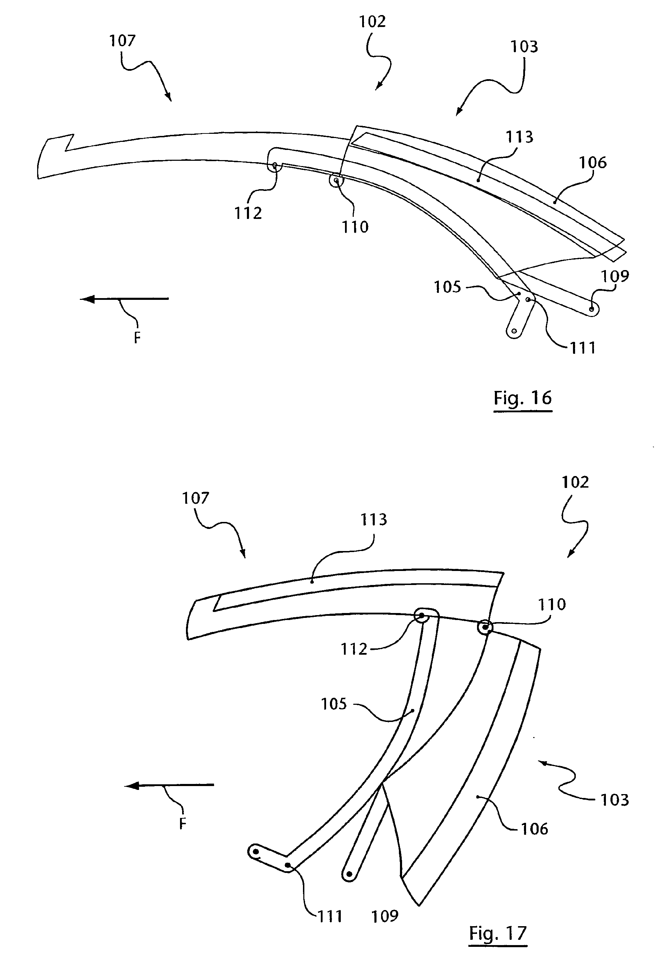

- Fig. 16: eine ähnliche Ansicht wie Fig. 15 bei vollständig geöffnetem Schiebedach,
- Fig. 17: die alternative Klappdachausbildung nach Fig. 14 während der Dachöffnung bei geschlossenem Schiebedach,

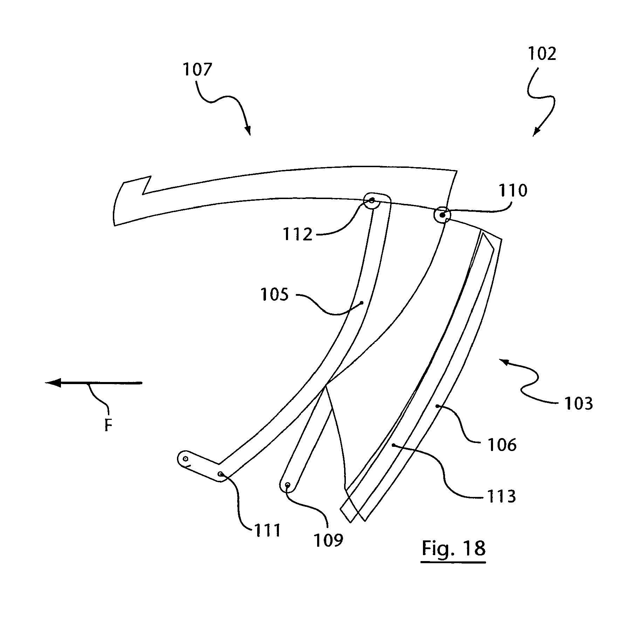

- Fig. 18: die alternative Klappdachausbildung nach Fig. 14 während der Dachöffnung bei geöffnetem Schiebedach.

Das dargestellte erfindungsgemäße Cabriolet-Fahrzeug 1 ist ein Zweisitzer. Auch ein Cabriolet-Fahrzeug mit etwa zwei Sitzreihen hintereinander kann erfindungsgemäß ausgebildet sein.

Das Fahrzeug 1 umfaßt ein bewegliches Dach, das in den Figuren 1 bis 13 insgesamt mit 2 und in den Figuren 14 bis 18 insgesamt mit 102 bezeichnet ist.

Das Dach 2 nach dem ersten Ausführungsbeispiel umfaßt einen bezüglich der Fahrtrichtung F rückwärtigen Dachteil 3 mit zwei seitlichen Hauptsäulen 4 und einem dazwischen befindlichen Mittelbereich 5. Dieser umfaßt eine oder ist im wesentlichen gebildet aus einer flexiblen oder insbesondere starren Heckscheibe 6, die beispielsweise aus Kunststoff oder vorteilhaft Glas bestehen kann. Sowohl die Hauptsäulen 4 als auch der Mittelbereich 5 sind starr und können daher Drehmomente übertragen. Die Hauptsäulen 4 sowie ein eventueller Rahmen 5a des Mittelteils 5 können beispielsweise aus Stahl, einem Leichtmetall, einem metallischen Schaumwerkstoff oder Kunststoff gebildet sein. Es ist auch möglich, daß auch die Hauptsäulen 4 transparent ausgebildet sind. Des weiteren können die Hauptsäulen 4 von Rahmenteilen unterstützt sein.

Weiter umfaßt das Dach 2 ein gegenüber dem Dachteil 3 im geschlossenen Zustand in Fahrtrichtung F vorgeordnetes oberes Dachteil 7. Dieses ist im Ausführungsbeispiel mit einem zweisitzigen Fahrzeug 1 von einem einzigen Körper ohne weitere durchgehende Querteilung gebildet. Im geschlossenen Zustand stützt sich dieser mit seinem vorderen Ende unmittelbar oder mittelbar am Windschutzscheibenrahmen 8 ab. Er kann wie die Hauptsäulen 4 aus unterschiedlichen Materialien gebildet sein. Zusätzlich ist der Körper 7 Träger eines im wesentlichen längs zum Fahrzeug verlagerbaren Schiebedachs 13, das weiter unten näher erläutert wird. Das Dachteil 7 kann neben dem Schiebedach 13 lediglich zwei seitliche Längsträger, in denen das Schiebedach 13 geführt ist, umfassen, oder diese können durch einen vorderen Querträger, der bei geschlossenem Dach an den Windschutzscheibenrahmen angrenzt, zu einer in Draufsicht U-förmigen Gestalt verbunden sein.

Die Hauptsäulen 4 sind in ihrem unteren Bereich über Ausleger 9a gegenüber der Karosserie 20 an zumindest während des Verschwenkens karosseriefesten Schwenklagern 9 gehalten. Deren Lagerachsen liegen horizontal und quer zum Fahrzeug 1. Im oberen Bereich sind die Hauptsäulen 4 an Schwenkgelenken 10, die ebenfalls horizontale und quer zum Fahrzeug 1 erstreckte Lagerachsen aufweisen, mit dem oberen Dachteil 7 verbunden, das oberhalb eines Insassenraums gelegen ist. Um die Achse der Schwenkgelenke 10 falten die Hauptsäulen 4 und das Dachteil 7 bei der Dachöffnung gegeneinander ein.

Der Mittelbereich 5 ist in seinem unteren Bereich über Ausleger 11a gegenüber der Karosserie 20 an einem oder mehreren zumindest während des Verschwenkens karosseriefesten Schwenklager(n) 11 gehalten. Deren Lagerachsen liegen horizontal und quer zum Fahrzeug 1. Im oberen Bereich ist der Mittelteil 5 an zumindest einem Schwenkgelenk 12, das ebenfalls eine horizontale und quer zum Fahrzeug 1 erstreckte Lagerachse aufweist, mit dem oberen Dachteil 7 verbunden. Hier sind zwei Schwenkgelenke 12, die den jeweiligen Fahrzeugseiten zugeordnet sind, vorgesehen.

Die Schwenkgelenke 11 und 12 des Mittelteils 5 liegen jeweils in Ebenen oberhalb der jeweiligen Ebene der Schwenkgelenke 9 und 10 der seitlichen Hauptsäulen 4. Wie unten noch näher erläutert ist, können die Schwenklager 9 und 11 optional zwar während des Verschwenkens karosseriefest, jedoch zwischen einer geschlossenen Dachstellung (Fig. 1) und einer zum Schwenken geeigneten hinteren Extremalstellung (Fig. 13) horizontal oder nahezu horizontal verschieblich sein. Dieses gilt prinzipiell für alle Ausführungsbeispiele.

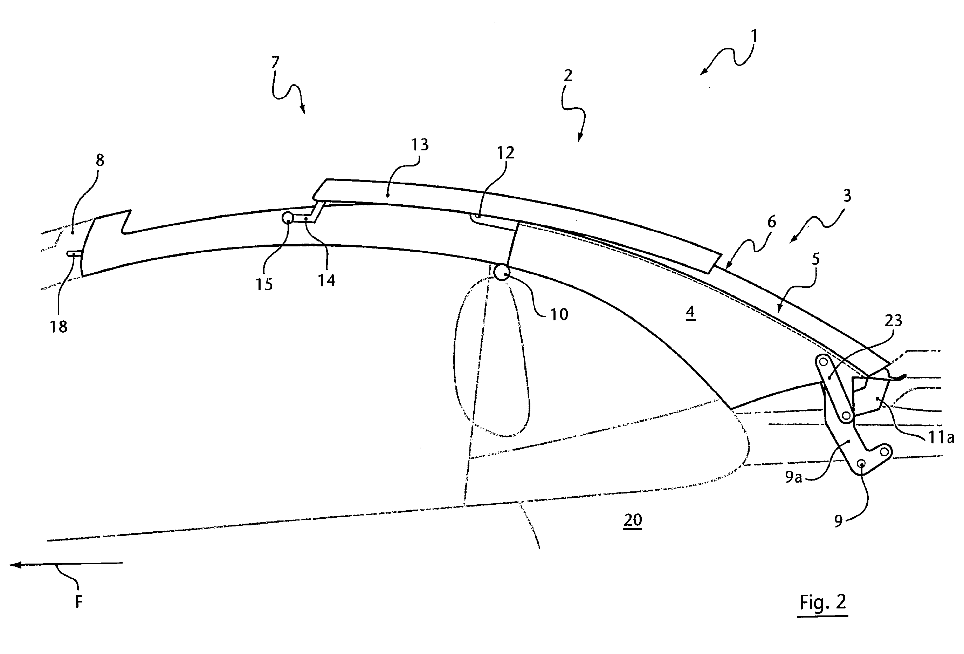

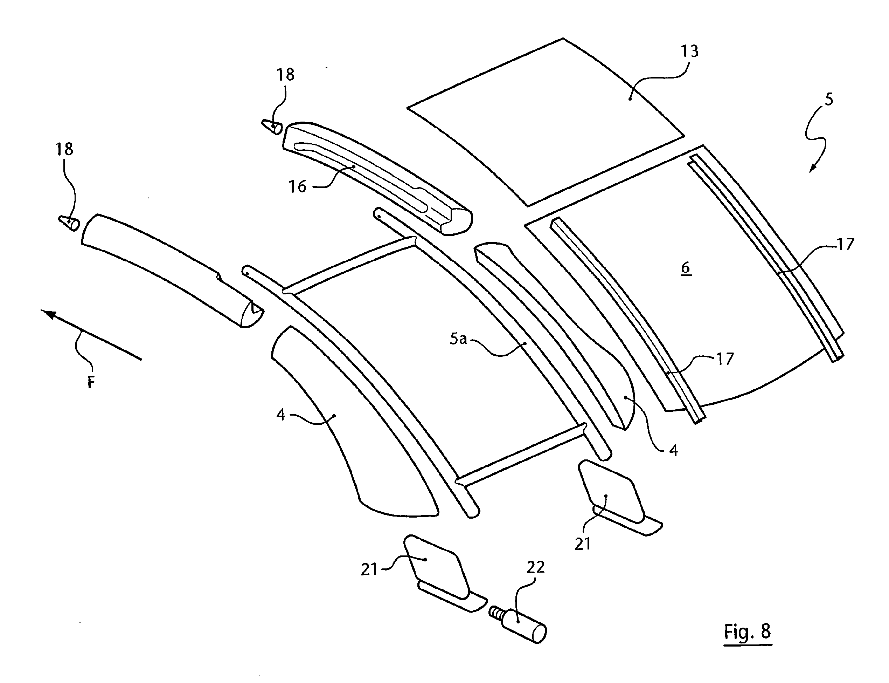

Das vordere Dachteil 7 umfaßt einen verschiebbaren Plattenkörper 13, der nach Art eines Schiebedachs zu öffnen und hierbei über den rückwärtigen Dachteil 3 zu verlagern ist (Fig. 2, 3, 4, 5, 6, 7, 8). Der Plattenkörper 13 ist aus einem transparenten Kunststoff oder Glas gebildet, so daß er auch bei Verlagerung über die Heckscheibe 6 die Sicht nach hinten nicht gefährdet. Er weist seitliche Ausleger 14 auf, die über Achsstummel 15 oder dergleichen Führungselemente in seitlichen Führungsbahnen 16 des oberen Dachteils 7 eingreifen. Des weiteren sind am Mittelteil 5 des hinteren Dachteils 3 Führungsschienen 17 vorgesehen (Fig. 8), die den Plattenkörper 13 in eine Parallellage zur Heckscheibe 6 führen und dort halten können. In geschlossener Stellung greift der Plattenkörper 13 sowohl über die im vorderen Bereich angeordneten Ausleger 14 in die Führungsbahnen 16 als auch über weitere Ausleger 14a (nur in Fig. 1 schematisch eingezeichnet) in die hinteren Führungsschienen 16 ein. Ein Öffnen des Daches 2 ist daher bei dem in den Figuren 1 bis 13 gezeigten Ausführungsbeispiel erst bei geöffnetem Schiebedach 13 möglich, da ansonsten das Schiebedach 13 das Einfalten der Dachteile 3 und 7 gegeneinander blockieren würde.

Zur Abdichtung ist der Oberkante des hinteren Dachteils 3 eine aufragende Dichtkante und der hinteren Kante des Plattenkörpers 13 eine abwärts weisende und die Dichtkante des hinteren Dachteils 3 hintergreifende Gegenkante zugeordnet. Im geschlossenen Zustand des Schiebedachs 13 liegen die Dichtkante und die Gegenkante kontaktierend aneinander.

Auch in maximal nach hinten verlagerter Öffnungsstellung des als Schiebedachs wirkenden Plattenkörpers 13 ist dieser in den Führungsschienen 17 des hinteren Dachteils 3 und über seine Ausleger 14 auch noch in den Führungsbahnen 16 des oberen Dachteils 7 gehalten. Der Endpunkt der Führungsbahnen 16 liegt auf der Schwenkachse des oberen Schwenkgelenks 12, mit dem der Mittelteil 5 an dem oberen Dachteil 7 angreift, wodurch das Dach 2 mit geöffnetem Schiebedach 13 geöffnet und geschlossen werden kann (sh. z. B. Fig. 5). Eine Programmsteuerung kann vorgesehen sein, über die sichergestellt ist, daß das Dach 2 nur bei vollständig geöffnetem Schiebedach 13 geöffnet oder geschlossen werden kann. Dadurch, daß das Schiebedach 13 sowohl mit seinen vorderen als auch seinen hinteren Auslegern in der jeweiligen Führung 16, 17 verbleibt, muß beim Öffnen des Schiebedachs 13 keine Stufe überwunden werden. Der Bewegungsablauf ist daher besonders glatt und auch nach längerer Fahrzeuglebensdauer zuverlässig durchzuführen. Weder ein vorderer Ausleger 14 noch ein hinterer Ausleger 14a des Schiebedachs 13 muß während dessen Bewegung die ihn leitende Führung 16 bzw. 17 verlassen. Ein durch Fertigungstoleranzen bedingter möglicher Versatz der Führungen 16, 17 ist daher für die Bewegung des Schiebedachs 13 irrelevant.

Alternativ wäre auch möglich, daß der Plattenkörper 13 im geschlossenem Zustand nur an dem oberen Dachteil 7 gehalten ist und im geöffneten Zustand vollständig an den hinteren Dachteil 3 übergeben ist, wie beispielhaft in den Figuren 14 bis 18 für ein weiteres Ausführungsbeispiel näher dargestellt ist. Dann wäre eine Dachöffnung sowohl bei vollständig geöffnetem als auch bei vollständig geschlossenem Schiebedach 13 möglich, wie weiter unten noch näher erläutert ist.

Der Mittelbereich 5 ist im ersten Ausführungsbeispiel Fig. 1 bis Fig. 13) durch einen Tragrahmen 5a und ein darauf befestigtes transparentes Plattenteil, das als Heckscheibe 6 dient, gebildet. Dieses kann ggf. die Führungsschienen 17 für das Schiebedach 13 tragen. Auch viele andere Konstruktionen, etwa auch mit einem Rahmen, in dessen Mitte die Heckscheibe gelegen ist, oder mit direkt an eine Heckscheibe angeschweißten Auslegern 11a, sind möglich.

Zur Festlegung des vorderen Dachteils 7 am Windschutzscheibenrahmen 8 sind dem Dachteil 7 in etwa in dessen Erstreckungsebene gelegene und im geschlossenen Zustand in Fahrtrichtung F weisende Zapfen 18 zugeordnet, die in komplementäre Ausnehmungen 19 des Windschutzscheibenrahmens 8 eingreifen können. Die Zapfen 18 können ebenso wie die Ausnehmungen 19 konisch ausgebildet sein, um dadurch eine Zentrierung des schließenden Daches 2 zu erleichtern. Eine zusätzliche Sicherung ist bei Vorsehen einer Sicherung des im nächsten Absatz erläuterten verschiebbaren Hauptlagers 21 nicht zwingend erforderlich.

Die karosseriefesten Schwenklager 9, 11 für die Teile 4, 5 sind in der oben erwähnten optionalen Ausbildung insgesamt in einem gegenüber der Karosserie 20 horizontal oder nahezu horizontal in Fahrzeuglängsrichtung verschieblichen seitlichen Hauptlager 21 angeordnet. Jedem dieser Hauptlager 21 ist ein Antrieb 22 zugeordnet, etwa ein Hydraulikzylinder, eine Spindel, ein Elektromotor oder ähnliches. Über diesen ist das jeweilige Hauptlager 21 - und damit das an diesem gehaltene Dach 2 - horizontal in Richtung des Pfeils H beweglich (Übergang von Fig. 1 zu Fig. 13) zwischen einer vorderen Extremalstellung bei vollständig geschlossenem Dach und einer hinteren Extremalstellung (Fig. 13), in der das Dach 2 so weit entgegen der Fahrtrichtung F verlagert ist, daß die Zapfen 18 außer Eingriff mit den Ausnehmungen 19 des Windschutzscheibenrahmens 8 gelangt sind. In dieser Stellung ist das Dach 2 frei um die Lager 21 schwenkbar, ohne daß Kollisionsgefahr der Dachspitze mit dem Windschutzscheibenrahmen 8 bestünde.

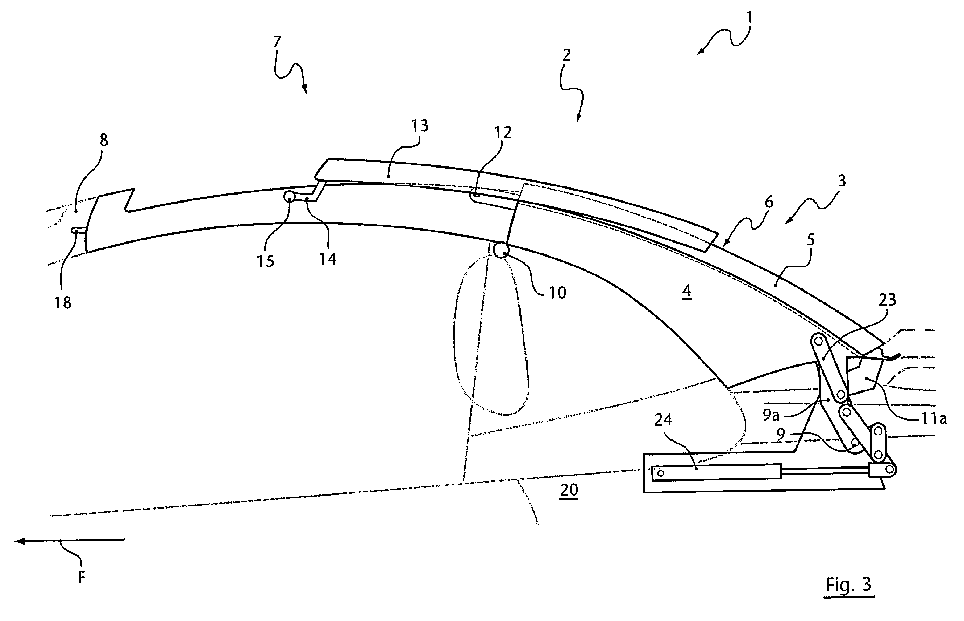

Die Dachteile 3, 7 sind für ihre Bewegung um die seitlich in der Karosserie 20 angeordneten Hauptlager 21 über ein Kopplungsglied 23 miteinander gekoppelt. Dieses erstreckt sich zwischen Auslegern 9a und 11a, die das jeweilige Schwenklager 9 mit einer Hauptsäule 4 bzw. das Schwenklager 11 mit dem Mittelereich 5 verbinden. Es genügt daher ein Antrieb 24 pro Fahrzeugseite (Fig. 3a), um eine gleichmäßige Schwenkbewegung um die Lager 9 und 11 zu bewirken.

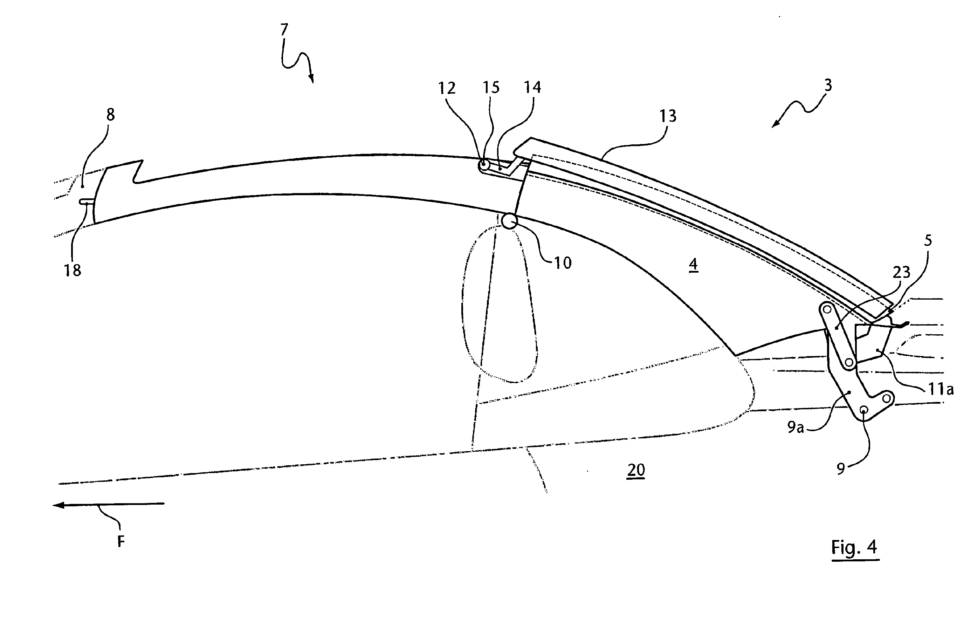

Zur Öffnung des Daches 2 aus der geschlossenen Stellung (Fig. 1) in eine vollständig geöffnete Stellung (Fig. 7) werden - ohne die Option des insgesamt verschieblichen Daches 2 - zunächst durch Kraft des Antriebs 24 (Fig. 3) die Ausleger 9a und 11a gleichzeitig um die jeweiligen karosseriefesten Lager 9, 11 heckwärts verschwenkt (Fig. 5 bis Fig. 7). In der Version nach den Figuren 1 bis 13 muß das Schiebedach 13 während der Öffnung des Daches 2 vollständig geöffnet sein. Im hier gezeigten Beispiel wird vor Dachöffnung zunächst das Schiebedach 13 über Führung der Ausleger 14 in den Führungsbahnen 16 und Führung des Plattenkörpers 13 in den Führungsschienen 17 des hinteren Dachteils 3 derart geöffnet, daß in seiner vollständig geöffneten Stellung die Achsstummel 15 koaxial mit der Schwenkachse des Schwenkgelenks 12 liegen (Fig. 4 ff.). Dabei sind die Achsstummel 15 weiter in den Führungsbahnen 16 gehalten, sie müssen somit beim Aufschieben des Schiebedachs 13 keine Stufe oder einen Versatz überwinden. Da der Mittelbereich 5 und das Dachteil 7 am Gelenk 12 gegeneinander einschwenken, kann während dieses Einschwenkens der Plattenkörper 13 unbewegt parallel zu der dem Mittelbereich 5 zugehörigen Heckscheibe 6 gehalten sein und dennoch mit den Auslegern 14 in den Führungsbahnen 16 des vorderen Dachteils 7 verbleiben.

Während des Aufschwenkens der Dachteile 3 und 7 durchläuft aufgrund des Höhenversatzes der Ebenen der Gelenke 9 und 10 einerseits und 11 und 12 andererseits der Mittelbereich 5 die Erstreckungsebene der Hauptsäulen 4. Die Langseiten des Gelenkparallelogramms, gebildet aus den Hauptsäulen 4 und dem Mittelbereich 5, falten gegeneinander durch, so daß am Ende die Parallelogrammorientierung gewechselt hat. Dadurch gelangt der Mittelbereich 5 in eine oberhalb der Hauptsäulen 4 liegende Ablagestellung in der Karosserie 20 (Fig. 7). Dies ist sehr vorteilhaft, weil dadurch unter dem Mittelbereich 5 mit der Heckscheibe 6 zusätzlicher Stauraum entsteht.

Mit der Option einer Horizontalverlagerung des gesamten Daches 2 würde zunächst dieses vor Einleitung der Aufschwenkbewegung nach hinten verschoben (Fig. 13) und nach vollständiger Dachöffnung wieder nach vorne verschoben werden können.

Das Durchfalten des Parallelogramms ist in den Figuren 9 bis 12 in schematischer Übersicht noch einmal hervorgehoben. Die dort gezeigten im wesentlichen stangenförmigen Teile sind zur Vereinfachung mit den Bezugszeichen 4, 5 und 7 für die jeweiligen Gesamtteile versehen worden, da es für den Bewegungsablauf nicht darauf ankommt, wie irgendwelche unterstützenden Rahmenteile für die genannten Einheiten 4, 5, 7 ausgebildet sind. Ebenso spielt für den hier dargestellten prinzipiellen Bewegungsablauf das Schiebedach 13 keine Rolle. Wie aus der Zeichnung sichtbar ist, sind zusätzliche Lenker außerhalb der Teile 4, 5 nicht erforderlich. Das Parallelogramm ist über das die Schwenkgelenke 10 und 12 verbindende Dachteil 7 geschlossen, ohne daß hier ein gesondertes Bauteil erforderlich wäre. Die Kopffreiheit bleibt daher uneingeschränkt. Mit dem Durchschwenken des Parallelogramms ist einerseits eine gedichtete Anlage zwischen dem Mittelbereich 5 und den Hauptsäulen 4 bei geschlossenem Dach 2 und andererseits die Halterung des Mittelbereichs 5 in einer erhöhten Ebene zur Vergrößerung des Gepäckraums erreicht.

In den Figuren 14 bis 18 ist ein weiteres Ausführungsbeispiel eines zweiteiligen Klappdachs 102 dargestellt, bei dem ein hinterer Dachteil 103 in einteiliger Ausführung ausgebildet ist, die Heckscheibe 106 somit fest mit seitlichen Hauptsäulen 104 verbunden ist. Wie insbesondere in den Figuren 17 und 18 sichtbar ist, ist ein Hauptlenker von dem hinteren Dachteil 103 gebildet. Ein weiterer Lenker 105 ist, wie aus der gattungsbildenden Schrift bekannt, in Fahrtrichtung F vor diesem angeordnet. Der Lenker 105 einerseits und das Dachteil 103 andererseits bilden somit ein Gelenkparallelogramm, oben über die Gelenke 112 und 110 sowie den hinteren Abschnitt des vorderen Dachteils 107 verbunden, und im unteren Bereich an den Lagern 109 und 111 an der Karosserie 20 schwenkbar gehalten. Die Karosserie 20 kann in diesem Ausführungsbeispiel nahezu gleichartig mit der des ersten Ausführungsbeispiels ausgebildet sein. Im Dach 102 hingegen ist aufgrund der festen Anbindung der Heckscheibe 106 an die Hauptsäulen 104 der zusätzliche Lenker 105 erforderlich. Anstelle des hoch angeordneten Gelenks 12 des ersten Ausführungsbeispiels findet sich hier das tief liegende Gelenk 112, so daß im zweiten Ausführungsbeispiel eine Verlagerung des Schiebedachs 113 unter die Heckscheibe 106 vorteilhaft ist. Das Schiebedach 113 wird anders als im ersten Ausführungsbeispiel bei seiner Öffnung (Übergang von Figur 14 zu Figur 16) komplett vom vorderen Dachteil 107 an eine Führung des hinteren Dachteils 103 übergeben. Ein Aufschwenken des Daches 102 ist somit sowohl bei vollständig geschlossenem Schiebedach 113 (Figur 17) als auch bei vollständig geöffnetem Schiebedach 113 (Figur 18) möglich.

Die Bewegung des Schiebedachs 13, 113 ist in beiden Ausführungsbeispielen während der Fahrt möglich. Solange das Dach 2, 102 in ansonsten geschlossener Position verbleibt, ist auch eine Teilöffnung des Schiebedachs 13, 113 jederzeit möglich.

Die Erfindung ist sowohl bei Fahrzeugen mit manuell zu bewegenden Dächern auch bei voll- oder teilautomatischer Beweglichkeit des Daches 2, 102 anwendbar. Es ist auch möglich, daß lediglich für die Horizontalverschiebung H und/ oder für das Schiebedach 13, 113 Antriebe vorgesehen sind und das eigentliche Ein- oder Ausfalten des Daches 2, 102 manuell erfolgt.

## Patentansprüche

1. Schwenkdach (2;102) für ein Cabriolet-Fahrzeug (1) mit starren Teilen, das zumindest einen hinteren (3;103) und einen daran in geschlossenem Zustand in Fahrtrichtung (F) vorgeordneten, oberhalb eines Insassenraums liegenden Dachteil (7;107) umfaßt, wobei der obere Dachteil (7;107) einen entgegen der Fahrtrichtung (F) nach Art eines Schiebedachs verlagerbaren und zumindest im wesentlichen transparenten Plattenkörper (13;113) umfaßt, der in seiner geöffneten Stellung parallel zu einer von dem hinteren Dachteil (3;103) umfaßten Heckscheibe (6;106) gehalten und in dieser Parallellage mit dem Dach (2;102) zu dessen Öffnen oder Schließen beweglich ist,
**dadurch gekennzeichnet,**
**daß** der Plattenkörper (13;113) dabei sowohl in geöffneter als auch in geschlossener Stellung jeweils mit einem vorderen Endbereich (14) in einer dem oberen Dachteil (7) zugeordneten Führung (16) und mit seinem hinteren Endbereich (14a) in einer dem hinteren Dachteil (3) zugeordneten Führung (17) gehalten ist.

2. Schwenkdach nach Anspruch 1,
**dadurch gekennzeichnet,**
**daß** der vordere Endbereich des Plattenkörpers (13) in dessen Öffnungsstellung über Ausleger (14) koaxial mit einer Achse eines Schwenkgelenks (12), das den hinteren (3) und den oberen Dachteil (7) miteinander verbindet, gehalten ist.

3. Schwenkdach nach einem der Ansprüche 1 oder 2, **dadurch gekennzeichnet,**
**dass** das Dach (2) mittels eines dem hinteren Dachteil (3) zugeordneten Schwenkparallelogramms beweglich ist, wobei der hintere Dachteil (3) in seitliche Hauptsäulen (4) und einen dazwischen liegenden und die Heckscheibe (6) umfassenden Mittelbereich (5) geteilt ist, wobei die Hauptsäulen (4) einerseits und der Mittelbereich (5) andererseits Teile des Schwenkparallelogramms bilden.

4. Schwenkdach nach Anspruch 3,
**dadurch gekennzeichnet,**
**daß** die Anlenkung (11) des Mittelbereichs (5) an der Karosserie (20) und die Anlenkung (12) des Mittelbereichs (5) an dem oberen Dachteil (7) jeweils oberhalb der Ebenen der jeweiligen Anlenkung (9;10) der Hauptsäule (4) gelegen und im geöffneten Zustand die Heckscheibe (6) oberhalb der Hauptsäulen (4) gehalten ist.

5. Schwenkdach nach einem der Ansprüche 1 bis 4, **dadurch gekennzeichnet,**
**daß** der Plattenkörper (13) über die Heckscheibe (6) verlagerbar ist und der Oberkante des hinteren Dachteils (3) eine aufragende Dichtkante und der hinteren Kante des Plattenkörpers (13) eine abwärts weisende und die Dichtkante des hinteren Dachteils (3) hintergreifende Gegenkante zugeordnet ist.

6. Schwenkdach nach Anspruch 1,
**dadurch gekennzeichnet,**
**daß** der Plattenkörper (113) im geschlossenen Zustand vollständig an dem oberen Dachteil (107) und im geöffneten Zustand vollständig an dem hinteren Dachteil (103) geführt ist.

7. Schwenkdach nach Anspruch 6,
**dadurch gekennzeichnet,**
**daß** das Dach (102) sowohl bei geöffnetem als auch bei geschlossenem Plattenkörper (113) beweglich ist.

8. Schwenkdach nach einem der Ansprüche 1 bis 7, **dadurch gekennzeichnet,**
**daß** das Dach (2;102) zwischen einer geschlossenen Stellung, in der das obere Dachteil (7;107) mittelbar oder unmittelbar an einem Windschutzscheibenrahmen (8) gehalten ist, und einer Zwischenstellung, in der die Halterung zwischen dem Dach (2;102) und dem Windschutzscheibenrahmen (8) gelöst ist, zumindest nahezu horizontal verlagerbar ist.

9. Cabriolet-Fahrzeug (1) mit einem Schwenkdach (2;102) nach einem der Ansprüche 1 bis 8.

## Claims

1. A pivoting roof (2; 102) for a convertible vehicle (1) with rigid parts, said roof comprising at least a rear roof part (3; 103) and a roof part (7; 107) which, in the closed state, is located in front of said rear roof part (3; 103) in the direction of travel (F) and above a passenger compartment, said upper roof part (7; 107) comprising a plate body (13; 113), which is displaceable opposite the direction of travel (F), in the manner of a sunroof, and is at least substantially transparent, said plate body (13; 113) being held, in its open position, parallel to a rear window (6; 106) enclosed in the rear roof part (3; 103) and being movable in this parallel position along with the roof (2; 102) for opening or closing the latter,
**characterised in that**,
in this case, the plate body (13; 113) is held, both in the open position and in the closed position, respectively by a front-end region (14) in a guide (16) assigned to the upper roof part (7) and by its rear-end region (14a) in a guide (17) assigned to the rear roof part (3).

2. The pivoting roof according to claim 1, **characterised in that**, in the open position of the plate body (13), its front-end region is held by arms (14) coaxially with respect to an axis of a pivot joint (12) connecting the rear roof part (3) and the upper roof part (7) with each other.

3. The pivoting roof according to any one of claims 1 or 2, **characterised in that** the roof (2) is displaceable by means of a pivoting parallelogram assigned to the rear roof part (3), said rear roof part (3) being divided into lateral main pillars (4) and a central region (5), arranged between the lateral main pillars (4) and comprising the rear window (6), said main pillars (4) on the one hand and said central region (5) on the other hand forming parts of the pivoting parallelogram.

4. The pivoting roof according to claim 3, **characterised in that** the articulation (11) of the central region (5) to the vehicle body (20) and the articulation (12) of the central region (5) to the upper roof part (7) are each located above the planes of the respective articulations (9; 10) of the main pillar (4) and the rear window (6) is held above the main pillars (4) in the open state.

5. The pivoting roof according to any one of claims 1 to 4, **characterised in that** the plate body (13) is displaceable over the rear window (6) and that an upwardly extending sealing edge is assigned to the upper edge of the rear roof part (3) and a downward-pointing, opposite edge is assigned to the rear edge of the plate body (13), said opposite edge engaging behind the sealing edge of the rear roof part (3).

6. The pivoting roof according to claim 1, **characterised in that**, when closed, the plate body (113) is guided completely on the upper roof part (107), and when open, the plate body (113) is guided completely on the rear roof part (103).

7. The pivoting roof according to claim 6, **characterised in that** the roof (102) is displaceable both when the plate body (113) is open and when it is closed.

8. The pivoting roof according to any one of claims 1 to 7, **characterised in that** the roof (2; 102) is displaceable at least nearly horizontally between a closed position, in which the upper roof part (7; 107) is held indirectly or directly on a windscreen frame (8), and an intermediate position, in which the engagement between the roof (2; 102) and the windscreen frame (8) is released.

9. A convertible vehicle (1) comprising a pivoting roof (2; 102) according to any one of claims 1 to 8.

## Revendications

1. Toit pivotant (2; 102) pour un véhicule cabriolet (1) avec des éléments rigides, ledit toit comprenant au moins un élément de toit arrière (3; 103) et un élément de toit (7; 107) disposé en avant dudit élément de toit arrière (3; 103) en direction de marche (F), à l'état fermé, et au-dessus d'un habitacle, ledit élément de toit supérieur (7; 107) comprenant un corps de plaque (13; 113), qui est déplaçable à la manière d'un toit ouvrant à l'opposée de la direction de marche (F) et qui est au moins sensiblement transparent, ledit corps de plaque (13; 113) étant retenu, dans sa position ouverte, parallèlement à une lunette arrière (6; 106) encadrée par l'élément de toit arrière (3; 103) et étant déplaçable dans cette position parallèle ensemble avec le toit (2; 102) pour ouvrir ou fermer ce dernier,
**caractérisé en ce que**,
dans ce cas-là, le corps de plaque (13; 113), et en position ouverte et en position fermée, est retenu respectivement, par une région d'extrémité avant (14), dans un guidage (16) associé à l'élément de toit supérieur (7) et, par sa région d'extrémité arrière (14a), dans un guidage (17) associé à l'élément de toit arrière (3).

2. Toit pivotant selon la revendication 1, **caractérisé en ce que**, dans la position ouverte du corps de plaque (13), sa région d'extrémité avant est retenue par des bras (14) de manière coaxiale à un axe d'une articulation pivotante (12) reliant l'élément de toit arrière (3) et l'élément de toit supérieur (7) entre eux.

3. Toit pivotant selon l'une quelconque des revendications 1 ou 2, **caractérisé en ce que** le toit (2) est déplaçable au moyen d'un parallélogramme articulé associé à l'élément de toit arrière (3), ledit élément de toit arrière (3) étant divisé en des montants principaux latéraux (4) et en une région centrale (5) disposée entre les montants principaux latéraux (4) et comprenant la lunette arrière (6), lesdits montants principaux (4) d'une part et ladite région centrale (5) d'autre part constituant des éléments dudit parallélogramme articulé.

4. Toit pivotant selon la revendication 3, **caractérisé en ce que** l'articulation (11) de la région centrale (5) à la carrosserie (20) et l'articulation (12) de la région centrale (5) à l'élément de toit supérieur (7) sont respectivement situées au-dessus des plans des articulations (9; 10) respectives du montant principal (4) et, en état ouvert, la lunette arrière (6) est retenue au-dessus des montants principaux (4).

5. Toit pivotant selon l'une quelconque des revendications 1 à 4, **caractérisé en ce que** le corps de plaque (13) est déplaçable sur la lunette arrière (6) et **en ce qu'**un bord d'étanchéité s'étendant vers le haut est associé au bord supérieur de l'élément de toit arrière (3) et un bord opposé, dirigé vers le bas, est associé au bord arrière du corps de plaque (13), ledit bord opposé s'engrenant derrière le bord d'étanchéité de l'élément de toit arrière (3).

6. Toit pivotant selon la revendication 1, **caractérisé en ce qu'**en état fermé, le corps de plaque (113) est guidé complètement sur l'élément de toit supérieur (107), et en état ouvert, le corps de plaque (113) est guidé complètement sur l'élément de toit arrière (103).

7. Toit pivotant selon la revendication 6, **caractérisé en ce que** le toit (102) est déplaçable n'importe si le corps de plaque (113) est ouvert ou fermé.

8. Toit pivotant selon l'une quelconque des revendications 1 à 7, **caractérisé en ce que** le toit (2; 102) est déplaçable au moins presque horizontalement entre une position fermée, dans laquelle l'élément de toit supérieur (7; 107) est retenue indirectement ou directement sur un cadre de pare-brise (8), et une position intermédiaire, dans laquelle le toit (2; 102) et le cadre de pare-brise (8) sont desserrés l'un de l'autre.

9. Véhicule cabriolet (1) comprenant un toit pivotant (2; 102) selon l'une quelconque des revendications 1 à 8.
